# EUROPEAN PATENT APPLICATION

(11) **EP 2 815 830 A1**
(43) Date of publication of application: **24.12.2014**
(21) Application number: 13748654.4
(22) Date of filing: 08.02.2013
(51) Int. Cl.: B23C 5/28, B23C 5/10

(54) **END MILL WITH COOLANT HOLES**

(30) Priority: 15.02.2012 JP 2012030557
(71) Applicant: Mitsubishi Materials Corporation, Chiyoda-ku Tokyo 100-8117 (JP)
(72) Inventor: FUKATA Kouji, Akashi-shi Hyogo 674-0071 (JP); MATSUMOTO Genki, Akashi-shi Hyogo 674-0071 (JP); AZEGAMI Takayuki, Akashi-shi Hyogo 674-0071 (JP)
(74) Representative: Hoffmann Eitle
(86) International application number: PCT/JP2013/052994
(87) International publication number: WO 2013/121993

(57) **Abstract**

In an end mill in which one of a plurality of end cutting edges is a long edge, good chip dischargeability and wear resistance are secured while preventing a decrease in the strength of the long edge or an end mill main body itself. Three end cutting edges (9) are formed at intersecting ridgeline portions between tip flanks (7) and wall surfaces facing an end mill rotation direction (T) of gashes (6) of tip portions of three chip discharge grooves (4) formed at an outer periphery of a tip portion of an end mill main body (1) which is rotated around an axis line (O), one end cutting edge (9) among the three end cutting edges is a long edge (9A) extending across the axis line (O) at a tip of the end mill main body (1), inner terminuses of two remaining end cutting edges (9) are disposed at intervals from the axis line (O), two coolant holes (10) are drilled toward a tip side in a direction of the axis line (O) in the end mill main body (1), a coolant hole (10A) on one side is opened at the tip flank (7) of the long edge (9A), and a coolant hole (10B) on the other side is opened at a gash (6B) of one end cutting edge (9B) of the two remaining end cutting edges (9).

## Description

### Technical Field

The present invention relates to an end mill with coolant holes in which a plurality of end cutting edges are formed at a tip portion of an end mill main body and a plurality of coolant holes are formed in the end mill main body and opened at the tip portion.

### Background Art

As such an end mill with coolant holes which is provided with a plurality of end cutting edges and a plurality of coolant holes, in, for example, PTL 1, there is proposed an end mill in which, with respect to an end mill in which coolant holes (fluid supply holes) are opened at tip flanks of two end cutting edges among four end cutting edges (tip cutting edges) of a four-edge end mill, to evenly supply coolant (a fluid) to all the end cutting edges, the end cutting edges are formed at a tip portion along three or four chip discharge grooves (spiral grooves), and as many coolant holes as the chip discharge grooves are respectively opened at tip flanks of the end cutting edges.

### Citation List

### Patent Literature

[PTL 1] Japanese Registered Utility Model No. 3025383

### Summary of Invention

### Technical Problem

Incidentally, as described in PTL 1, in a structure in which as many coolant holes as the chip discharge grooves are respectively formed at the tip flanks of the end cutting edges of the tips of the chip discharge grooves, it is effective to improve the wear resistance of the tip flank. However, in a case where an axial cutting depth is large, the coolant does not reach the chip discharge groove and chip dischargeability is impaired, and thus there is a concern that chip jamming or welding may occur. Further, in a structure in which the coolant holes are opened at the tip flanks of two end cutting edges among four end cutting edges, there is also a concern whether a sufficiently amount of coolant is being supplied.

Contrarily, in an end mill in which gashes are formed at tip portions of a plurality of chip discharge grooves and end cutting edges are respectively formed at intersecting ridgeline portions between the wall surfaces facing end mill rotation direction sides of the gashes and tip flanks, it is considered that coolant holes are respectively opened at the gashes to secure chip dischargeability. However, in this case, it becomes difficult for a fluid to reach a cutting site by the end cutting edge, and thus there is a concern that wear resistance may be impaired. Further, in a case where a coolant hole is opened at a bottom portion of a gash, since such a gash bottom portion is a portion on which stress due to cutting load is most concentrated, the strength of the end cutting edge is lowered, and thus a loss or the like easily occurs.

In addition, in order to achieve both the chip dischargeability and the wear resistance, it is also considered that coolant holes are respectively opened at both the gash and the tip flank with respect to each end cutting edge. However, in this case, since the number of coolant holes is double the number of end cutting edges, the cross-sectional area of an end mill main body is reduced, and thus the strength thereof is significantly lowered, resulting in an extreme decrease in breakage resistance or loss resistance.

Further, in recent years, an additional structure has been proposed in which one of a plurality of end cutting edges is formed as a long edge extending across an axis line of an end mill main body at a tip of the end mill main body. In such a structure, since more chips are produced due to the long edge, jamming easily occurs in a chip discharge groove of the long edge. However, load during cutting also becomes largest in the long edge and wear or a loss easily occurs, creating a big issue whether to open a coolant hole at what position.

The present invention has been made under such a background and has an object to provide an end mill in which one of a plurality of end cutting edges is formed as a long edge on the end mill as described above, and good chip dischargeability and wear resistance are secured while decrease in strength is prevented in the long edge or an end mill main body itself.

### Solution to Problem

In order to achieve such an object by solving the above-described problem, according to the present invention, there is provided an end mill with coolant holes, wherein three chip discharge grooves are formed at an outer periphery of a tip portion of an end mill main body which is rotated around an axis line, gashes are respectively formed at tip portions of the chip discharge grooves, three end cutting edges are formed at intersecting ridgeline portions between wall surfaces facing an end mill rotation direction of the gashes and tip flanks of the end mill main body, one end cutting edge among the three end cutting edges is a long edge extending across the axis line from an outer periphery side at a tip of the end mill main body, inner terminuses of two remaining end cutting edges are disposed at intervals from the axis line at the tip of the end mill main body, two coolant holes are drilled toward a tip side in a direction of the axis line in the end mill main body, a coolant hole on one side of the coolant holes is opened at a tip flank of the long edge, and a coolant hole on the other side is opened at the gash of one end cutting edge of the two remaining end cutting edges.

Therefore, in the end mill configured in the above described manner, first, the number of end cutting edges is three, whereas the number of the coolant holes is two. As such, the number of coolant holes is one less than the number of end cutting edges, and it is possible to sufficiently secure the strength of the end mill main body. Further, with respect to the long edge where load during cutting becomes the largest among the end cutting edges, the coolant hole on one side of the two coolant holes is not opened at the gash of the long edge and is opened at the tip flank of the long edge, and therefore, it is possible to secure the strength and wear resistance of the long edge.

On the other hand, the coolant hole on the other side of the two coolant holes is opened at the gash of an end cutting edge which is not a long edge, that is, one end cutting edge of the two remaining end cutting edges which do not reach the axis line at the tip of the end mill main body and in which inner terminuses are disposed at intervals from the axis line at the tip of the end mill main body, and load during cutting of such an end cutting edge is smaller than load in the long edge, and therefore, even if the coolant hole on the other side is opened at the gash, the wear of the end cutting edge is not significantly promoted, and even if the coolant hole on the other side is opened at a bottom portion of the gash, there is less concern that a loss or the like may occur in the end cutting edge.

Then, in this manner, the remaining end cutting edges are end cutting edges which do not reach the axis line at the tip of the end mill main body and in which inner terminuses are disposed at intervals from the axis line at the tip of the end mill main body, whereby gap portions in which end cutting edges are not present are formed on the inner periphery sides of the end cutting edges between the end cutting edges and the axis line. Therefore, the coolant supplied from the coolant hole on the other side sufficiently reaches the chip discharge grooves of the remaining end cutting edges or the long edge through the gap portions, whereby it is possible to secure chip dischargeability. Therefore, in not only the end cutting edges which do not reach the axis line but also the long edge, it is possible to reliably prevent chip jamming or welding in the chip discharge groove.

Further, the coolant hole on the other side is formed so as to be opened at a gash of one end cutting edge adjacent to the long edge in the end mill rotation direction, whereby it is possible to make the coolant supplied from the coolant hole on the other side efficiently and sufficiently flow into the chip discharge groove of the long edge on immediately the rear side in the end mill rotation direction through the gap portion which is formed on the inner periphery side of the one end cutting edge, and thus it is possible to better prevent chip jamming or welding in the chip discharge groove of the long edge.

In addition, a gash of the long edge is made so as to communicate with the gash of one end cutting edge adjacent to the long edge in the end mill rotation direction and the gash of the one end cutting edge adjacent to the long edge in the end mill rotation direction is made so as to communicate with a gash of one remaining end cutting edge adjacent to the one end cutting edge in the end mill rotation direction. Therefore, the gashes of the remaining end cutting edges in the end mill rotation direction from the gash of the long edge are formed so as to sequentially communicate with each other, whereby the gap portions which are formed on the inner periphery sides of the remaining end cutting edges become large, and thus it becomes possible to supply more coolant to the chip discharge groove of the long edge.

### Advantageous Effects of Invention

As described above, according to the present invention, in an end mill in which one of three end cutting edges is a long edge, it is possible to attain improvement in strength of an end mill main body and in addition, it becomes possible to secure good chip dischargeability and wear resistance along with the remaining end cutting edges while preventing a decrease in strength even with respect to the long edge where load during cutting becomes large and a large amount of chips are produced.

### Brief Description of Drawings

Fig. 1 is a perspective view showing an embodiment of the present invention.
Fig. 2 is an enlarged front view of the embodiment shown in Fig. 1.
Fig. 3 is a side view as viewed from a direction of an arrow A in Fig. 2.
Fig. 4 is a side view as viewed from a direction of an arrow B in Fig. 2.

### Reference Signs List

1: end mill main body
2: shank portion
3: cutting edge portion
4: chip discharge groove
5: peripheral cutting edge
6 ((6A to 6C): gash
7: tip flank
8: rake face
9: end cutting edge
9A: long edge
9B: medium edge
9C: short edge
10 ((10A, 10B): coolant hole
O: axis line of end mill main body 1
T: end mill rotation direction

### Description of Embodiments

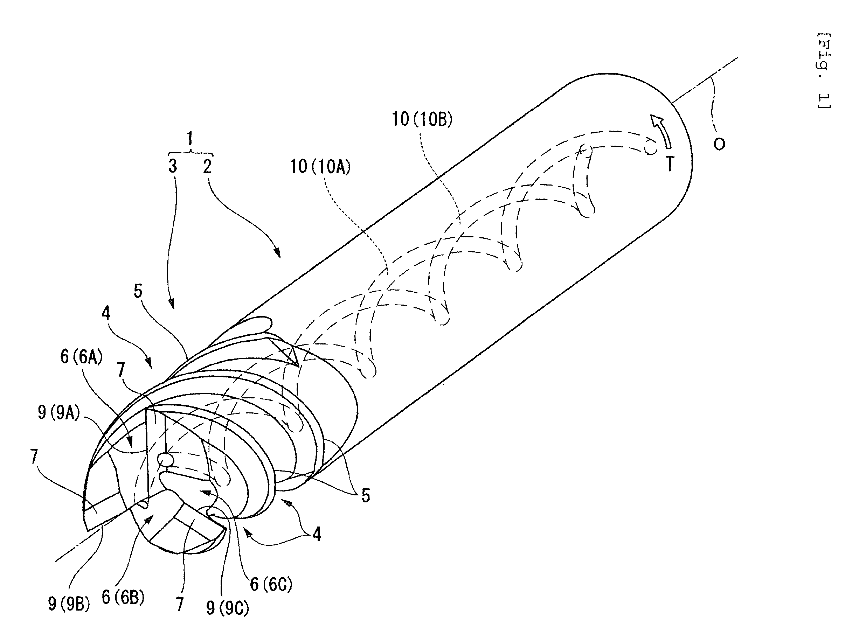

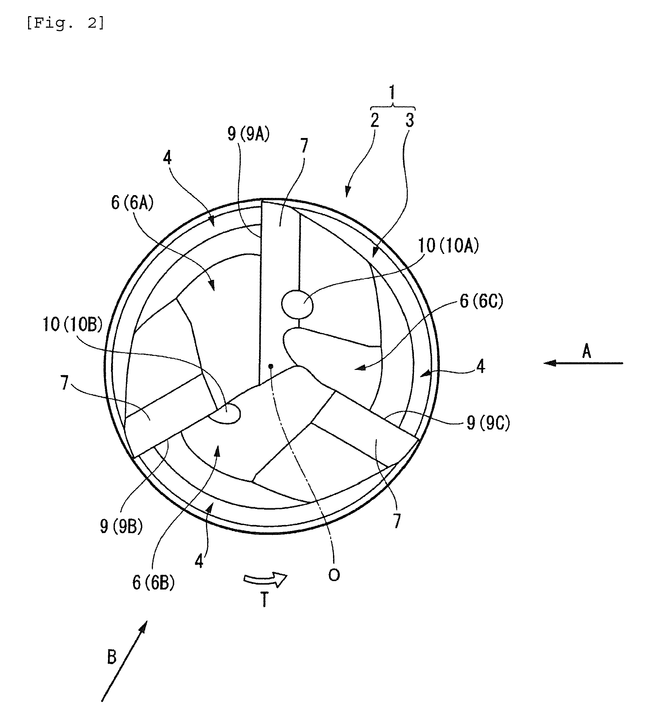

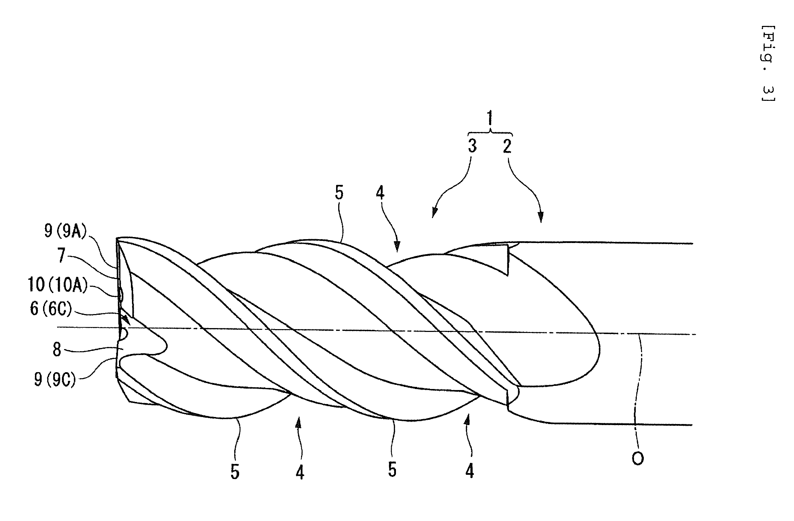

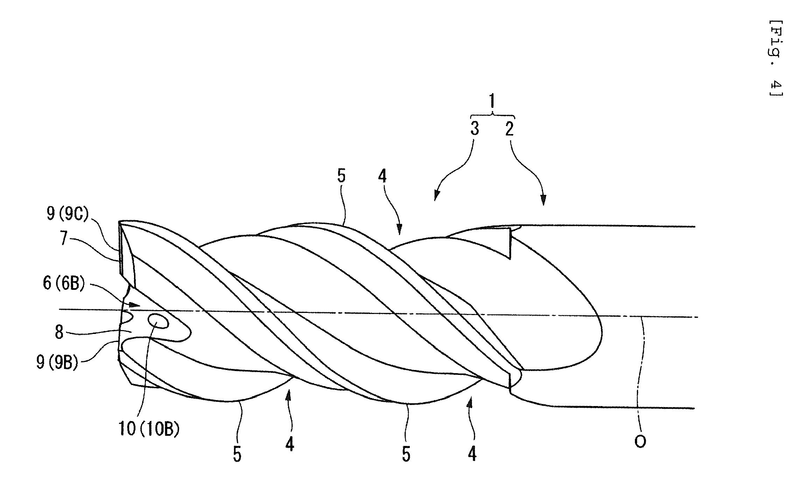

Figs. 1 to 4 show an embodiment of the present invention. In this embodiment, an end mill main body 1 is integrally formed in the form of a substantially cylindrical shaft centered on an axis line O by using a hard material such as cemented carbide, and a rear end portion (an upper right portion in Fig. 1 and a right portion in Figs. 3 and 4) thereof is regarded as a shank portion 2 of a cylindrical shape as it is, and a tip portion (a lower left portion in Fig. 1 and a left portion in Figs. 3 and 4) is regarded as a cutting edge portion 3. Such an end mill cuts a work material by the cutting edge portion 3 by being fed usually in a direction intersecting the axis line O while being rotated in an end mill rotation direction T around the axis line O with the shank portion 2 gripped by a main spindle of a machine tool.

At the outer periphery of the cutting edge portion 3 of the tip portion of the end mill main body 1, three chip discharge grooves 4 which are twisted around the axis line O to the rear side in the end mill rotation direction T as they go toward the rear end side from a tip of the cutting edge portion 3 are formed, in this embodiment, at regular intervals in a circumferential direction. At outer periphery-side side ridge portions of wall surfaces facing the end mill rotation direction T of the chip discharge grooves 4, peripheral cutting edges 5 which are twisted around the axis line O to the rear side in the end mill rotation direction T as they go toward the rear end side from the tip of the cutting edge portion 3, similar to each chip discharge groove 4, and in each of which a rotation locus around the axis line O forms a single cylindrical surface centered on the axis line 0 are formed likewise at regular intervals in the circumferential direction.

Further, at a tip portion of each chip discharge groove 4, a gash 6 having a concave groove shape is formed by cutting out the wall surface facing the end mill rotation direction T side toward the inner periphery side of the end mill main body 1. Then, at intersecting ridgeline portions between the wall surfaces facing the end mill rotation direction T side of the gashes 6 and tip flanks 7 of the tip of the cutting edge portion 3, three end cutting edges 9 which extend from the tips of the peripheral cutting edges 5 to the inner periphery side with the wall surfaces of the gashes 6 as rake faces 8 are respectively formed likewise at regular intervals in the circumferential direction.

Here, the end mill of this embodiment is regarded as a square end mill in which the three end cutting edges 9 are approximately located on a single plane perpendicular to the axis line O in the rotation locus around the axis line O and therefore, the peripheral cutting edges 5 and the end cutting edges 9 are orthogonal to each other in the rotation locus. Further, the gash 6 in this embodiment has a substantially V-shaped cross-section in which the wall surface facing the end mill rotation direction T side and serving as the rake face 8 and the wall surface opposite to the above-mentioned wall surface and facing the rear side in the end mill rotation direction T are connected through a concave surface at a bottom portion of the gash 6, as shown in Figs. 3 and 4.

In addition, two gashes 6A and 6B among the three gashes 6 formed at the tip portions of the three chip discharge grooves 4 are formed so as to extend to cut out the wall surfaces serving as the rake faces 8 of the end cutting edges 9 of gashes 6B and 6C adjacent to the end mill rotation direction T sides thereof and the tip flanks 7 of the end cutting edges 9 thereof so as to communicate with the gashes 6B and 6C. On the other hand, one remaining gash 6C is formed such that the gash 6C does not communicate with the gash 6A adjacent to the end mill rotation direction T side thereof and the tip flank 7 of the end cutting edge 9 is left between the gash 6C and the end cutting edge 9 having the wall surface of the gash 6A serving as the rake face 8.

Therefore, the end cutting edge 9 of the gash 6A with which the gash 6C adjacent to the rear side in the end mill rotation direction T does not communicate extends to a position where the gash 6B adjacent to the end mill rotation direction T side of the gash 6A cuts out the rake face 8 and the tip flank 7 of the end cutting edge 9, toward the inner periphery side from a tip of the peripheral cutting edge 5, thereby becoming a long edge 9A extending across the axis line O at a tip of the end mill main body 1.

Further, inner peripheral ends of two remaining end cutting edges 9 other than the long edge 9A are located on the outer periphery side at intervals from the axis line O at the tip of the end mill main body 1, and in this embodiment, among these, the end cutting edge 9 adjacent to the end mill rotation direction T side of the long edge 9A is regarded as a medium edge 9B having a shorter edge length than the long edge 9A and a slightly longer edge length than the end cutting edge 9 adjacent to the rear side in the end mill rotation direction T of the long edge 9A. In addition, the end cutting edge 9 adjacent to the rear side in the end mill rotation direction T of the long edge 9A is regarded as a short edge 9C having the shortest edge length among the three end cutting edges 9.

In addition, in the end mill main body 1, two coolant holes 10 are drilled toward the tip side from the rear end surface of the shank portion 2. The coolant holes 10 have, in this embodiment, circular cross-sections having the same diameter with respect to one another, are located at positions away from the axis line O by a constant radius and at 180° symmetry positions with respect to the axis line O, and are spirally drilled so as to be twisted toward the rear side in the end mill rotation direction T around the axis line 0 as they go to the rear end side in the direction of the axis line 0, as shown by dashed lines in Fig. 1, and a lead thereof is made to equal to a lead of the twist of the chip discharge groove 4.

Then, in the coolant holes 10, in the tip of the end mill main body 1, a coolant hole 10A on one side is opened at the tip flank 7 of the long edge 9A and a coolant hole 10B on the other side is opened at the gash 6 of one end cutting edge 9 of the two remaining end cutting edges 9. In particular, in this embodiment, the coolant hole 10B on the other side is opened at the bottom portion forming a concave surface shape of the gash 6B of the medium edge 9B adjacent to the long edge 9A in the end mill rotation direction T.

In the end mill with coolant holes configured in this manner, the number of end cutting edges 9 is three, whereas the coolant holes 10 are two. As such, the number of coolant holes 10 is one less than the number of end cutting edges 9, and therefore, the cross-sectional area of the end mill main body 1 is less likely to be reduced due to the coolant holes 10. For this reason, sufficient strength is ensured for the end mill main body 1, whereby it is possible to prevent occurrence of breakage or the like.

Further, the coolant hole 10A on one side of the two coolant holes 10 is opened at the tip flank 7 of the long edge 9A and the coolant hole 10B on the other side is opened at the gash 6B of the medium edge 9B, and thus the coolant hole 10 is not opened at the gash 6A of the long edge 9A. For this reason, while the greatest cutting load acts on the long edge 9A extending across the axis line 0 at the tip of the end mill main body 1, sufficient strength is also ensured for the long edge 9A, whereby it is possible to prevent a loss or the like, and it is possible to attain improvement in the wear resistance of the long edge 9A.

On the other hand, in this way, the medium edge 9B in which the coolant hole 10B on the other side is opened at the bottom surface of the gash 6B does not extend across the axis line 0 at the tip of the end mill main body 1, unlike the long edge 9A, and is made shorter than the long edge 9A, and therefore, load acting during cutting is also reduced. For this reason, even if the coolant hole 10B on the other side is opened at, for example, a bottom portion of the gash 6B of the medium edge 9B, as described above, it is possible to prevent the situation that cracks or a loss occurs toward the medium edge 9B from an opening portion of the coolant hole 10B on the other side due to concentration of stress by cutting load, and even if the coolant hole 10 is not opened at the tip flank 7 of the medium edge 9B, it is possible to suppress wear of the medium edge 9B.

Then, the medium edge 9B and the short edge 9C slightly shorter than the medium edge 9B do not extend across the axis line 0 at the tip of the end mill main body 1, unlike the long edge 9A, and the inner peripheral ends thereof are disposed on the outer periphery side at intervals from the axis line O, whereby between the inner peripheral ends of the medium edge 9B and the short edge 9C and the axis line O, the end cutting edges 9 which are involved in cutting are not formed and gap portions which retreat to the rear end side of the end mill main body 1 with respect to the rotation locus which is formed around the axis line 0 by the long edge 9A are formed.

For this reason, it is possible to attain the cooling and lubrication of the medium edge 9B by coolant supplied from the coolant hole 10B on the other side, and in addition, it is possible to attain the cooling and lubrication of the long edge 9A by feeding coolant from the gap portion between the inner peripheral end of the medium edge 9B and the axis line O to the gash 6A of the long edge 9A and to improve chip dischargeability by allowing the coolant to sufficiently reach even the chip discharge groove 4 of the long edge 9A. Therefore, it is possible to reliably prevent occurrence of chip jamming, welding, or the like in the chip discharge groove 4 of the long edge 9A in which more chips are significantly produced because the edge length is long.

Further, since the coolant supplied from the coolant hole 10B on the other side flows to even the gash 6C of the short edge 9C through the gap portion between the inner peripheral end of the short edge 9C and the axis line O and is discharged through the chip discharge groove 4 thereof, also with respect to the short edge 9C in which the coolant hole 10 is not opened at the gash 6C or the tip flank 7, it is also possible to attain stable cooling and lubrication or improvement in chip dischargeabiity. In addition, the coolant supplied from the coolant hole 10A on one side opened at the tip flank 7 of the long edge 9A adjacent to the end mill rotation direction T side of the short edge 9C also contributes to the cooling and lubrication or chip dischargeabiity of the short edge 9C.

In particular, in this embodiment, the coolant hole 10B on the other side is opened at the gash 6B of the medium edge 9B which is the end cutting edge 9 adjacent to the end mill rotation direction T side of the long edge 9A, and the coolant supplied from the coolant hole 10B on the other side can be more efficiently and sufficiently fed from the gap portion to the gash 6A or the chip discharge groove 4 of the long edge 9A by the rotation of the end mill main body 1. Therefore, according to this embodiment, it is possible to better suppress or prevent the wear of the long edge 9A or chip jamming or welding in the chip discharge groove 4 of the long edge 9A.

Further, in this embodiment, as described above, the gap portions as described above are formed between the inner peripheral ends of the medium edge 9B and the short edge 9C and the axis line O, thereby making the gash 6A of the long edge 9A communicate with the gash 6B of the medium edge 9B which is one end cutting edge 9 adjacent to the end mill rotation direction T side of the long edge 9A and making the gash 6B of the medium edge 9B communicate with the gash 6C of the short edge 9C which is one remaining end cutting edge 9 adjacent to the end mill rotation direction T side of the medium edge 9B.

Therefore, the concave groove-shaped gashes 6A and 6B and the gashes 6B and 6C communicate with each other in this manner, whereby the gap portions which are formed on the inner periphery sides of the medium edge 9B and the short edge 9C can be made so as to more greatly retreat to be recessed to the rear end side of the end mill main body 1. For this reason, according to this embodiment, it is possible to attain further reliable cooling or lubrication and improvement in chip dischargeability by feeding the coolant supplied from the coolant hole 10B on the other side to the gash 6A or 6C and the chip discharge groove 4 of the long edge 9A or the short edge 9C in larger quantity.

Further, in this embodiment, as described above, the two coolant holes 10 have the same diameter. However, in order to increase the amount of coolant which is supplied from the coolant hole 10B on the other side, the inner diameter of the coolant hole 10B on the other side may be made to be larger than that of the coolant hole 10A on one side, or, even if the inner diameters remain as the same diameter, the supply pressure of the coolant which is supplied from the machine tool side to an opening portion of the coolant hole 10B on the other side in the rear end surface of the shank portion 2 may be made to be higher than in the coolant hole 10A on one side.

Further, in this embodiment, the coolant hole 10B on the other side is opened at the gash 6B of the medium edge 9B which is the end cutting edge 9 adjacent to the end mill rotation direction T side of the long edge 9A. However, since the gap portions into which the coolant flows are formed on the inner periphery sides of the two remaining end cutting edges 9 other than the long edge 9A, the coolant hole 10B on the other side may be opened at the gash 6C of the short edge 9C which is the end cutting edge 9 adjacent to the rear side in the end mill rotation direction T of the long edge 9A.

However, as in this embodiment, in a case where the coolant hole 10B on the other side is opened at the gash 6B of the medium edge 9B which is the end cutting edge 9 adjacent to the end mill rotation direction T side of the long edge 9A, since it is possible to dispose the two coolant holes 10 at the symmetry positions with respect to the axis line O, as described above, between the coolant hole 10B on the other side and the coolant hole 10A on one side which is opened at the tip flank 7 of the long edge 9A and it is possible to maintain rotational balance of the end mill main body 1, it is possible to efficiently feed the coolant to the medium edge 9B, and together with this, it is more preferable.

In addition, in this embodiment, the coolant hole 10B on the other side is opened at the bottom portion of the gash 6B of the medium edge 9B. However, the coolant hole 10B on the other side may be made so as to be opened toward the medium edge 9B at, for example, the wall surface facing the rear side in the end mill rotation direction T of the gash 6B. Further, in this embodiment, the gash 6 also has a substantially V-shaped cross-section in which the end mill rotation direction T side and the wall surface facing the rear side thereof are connected through the concave surface-shaped bottom portion. However, the gash 6 may have a trapezoidal cross-section in which the bottom portion has a planar shape intersecting with both side walls at an obtuse angle.

Further, in this embodiment, the coolant hole 10 has a spiral shape having the same lead as the lead of the chip discharge groove 4. However, if the coolant hole 10 is drilled in a circle (a core diameter circle) which is inscribed in the bottom surface of the chip discharge groove 4 in a cross-section intersecting with the axis line O, the coolant hole 10 may extend, for example, in the form of a straight line parallel to the axis line O. However, in view of the re-polishing of the end cutting edge 9, it is preferable that the coolant hole 10 be spirally formed, as in this embodiment.

In addition, in this embodiment, the three end cutting edges 9 are configured by the long edge 9A, and the medium edge 9B and the short edge 9C, the edge lengths of which become shorter in order in the end mill rotation direction T from the long edge 9A. However, the two remaining end cutting edges 9 other than the long edge 9A may have the same edge length each other. Further, the short edge 9C and the medium edge 9B may be disposed in this order in the end mill rotation direction T from the long edge 9A. In addition, the three end cutting edges 9 or the peripheral cutting edges 5 may have unequal intervals or may have unequal leads, and a concave angle may be given to the end cutting edge 9 so as to face the rear end side of the end mill main body 1 toward the inner periphery side, and the present invention may be applied to, for example, a radius end mill other than the square end mill.

## Claims

1. An end mill with coolant holes, wherein three chip discharge grooves are formed at an outer periphery of a tip portion of an end mill main body which is rotated around an axis line, gashes are respectively formed at tip portions of the chip discharge grooves, three end cutting edges are formed at intersecting ridgeline portions between wall surfaces facing an end mill rotation direction of the gashes and tip flanks of the end mill main body, one end cutting edge among the three end cutting edges is a long edge extending across the axis line from an outer periphery side at a tip of the end mill main body, inner terminuses of two remaining end cutting edges are disposed at intervals from the axis line at the tip of the end mill main body, two coolant holes are drilled toward a tip side in a direction of the axis line in the end mill main body, a coolant hole on one side of the coolant holes is opened at a tip flank of the long edge, and a coolant hole on the other side is opened at the gash of one end cutting edge of the two remaining end cutting edges.

2. The end mill with coolant holes according to Claim 1, wherein the coolant hole on the other side is opened at the gash of one end cutting edge adjacent to the long edge in the end mill rotation direction.

3. The end mill with coolant holes according to Claim 1 or 2, wherein the gash of the long edge is made so as to communicate with the gash of one end cutting edge adjacent to the long edge in the end mill rotation direction, and the gash of the one end cutting edge adjacent to the long edge in the end mill rotation direction is made so as to communicate with the gash of one remaining end cutting edge adjacent to the one end cutting edge in the end mill rotation direction.
